# EUROPÄISCHE PATENTSCHRIFT

(11) **EP 3 908 750 B1**
(45) Veröffentlichungstag und Bekanntmachung des Hinweises auf die Patenterteilung: **31.01.2024**
(21) Anmeldenummer: 19832894.0
(22) Anmeldetag: 18.12.2019
(51) Int. Cl.: F03D 80/50

(54) **WINDENERGIEANLAGE UND VERFAHREN ZUM BETREIBEN EINER WINDENERGIEANLAGE**
WIND TURBINE AND METHOD FOR OPERATING A WIND TURBINE
AÉROGÉNÉRATEUR ET PROCÉDÉ POUR FAIRE FONCTIONNER UN AÉROGÉNÉRATEUR

(30) Priorität: 08.01.2019 DE 102019000055
(43) Veröffentlichungstag der Anmeldung: 17.11.2021
(73) Patentinhaber: Siemens Gamesa Renewable Energy Service GmbH, 20097 Hamburg (DE)
(72) Erfinder: SCHADE, Horst, 24360 Barkelsby (DE)
(74) Vertreter: Schlotter, Alexander Carolus Paul
(86) Internationale Anmeldenummer: PCT/EP2019/085920
(87) Internationale Veröffentlichungsnummer: WO 2020/144025

(56) Entgegenhaltungen:
- EP-A1- 2 924 282
- WO-A1-2017/055598
- US-A1- 2018 282 134

## Beschreibung

Die vorliegende Erfindung betrifft eine Windenergieanlage mit einer Tragstruktur, wobei die Tragstruktur wenigstens ein Strukturbauteil mit wenigstens einem Befestigungsabschnitt und wenigstens ein Verstärkungselement aufweist. Des Weiteren betrifft die Erfindung ein Verfahren zum Betreiben, insbesondere zum Warten, einer Windenergieanlage.

Windenergieanlagen mit Tragstrukturen sowie Verstärkungselemente an sich zur Verstärkung, insbesondere zur Versteifung, von Tragstrukturen sind im Allgemeinen aus dem Stand der Technik bekannt. Vor diesem Hintergrund ist es eine Aufgabe der Erfindung, eine alternative Windenergieanlage bereitzustellen, insbesondere eine verbesserte Windenergieanlage, welche insbesondere vorteilhaft ist im Hinblick auf eine Betriebsfestigkeitsauslegung und/oder welche insbesondere vorteilhaft hinsichtlich ihrer Wartungseigenschaften ist.

Diese Aufgabe wird gelöst durch eine Windenergieanlage und ein Verfahren zum Betrieb einer Windenergieanlage gemäß den unabhängigen Ansprüchen. Vorteilhafte Ausgestaltungen sind Gegenstand der Unteransprüche und werden im Folgenden näher erläutert.

Ein erster Aspekt der Erfindung betrifft eine Windenergieanlage mit einer Tragstruktur, wobei die Tragstruktur wenigstens ein Strukturbauteil mit wenigstens einem Befestigungsabschnitt und wenigstens ein Verstärkungselement aufweist, wobei das Strukturbauteil mehrere Befestigungsausnehmungen aufweist, welche zur Befestigung eines Betriebsmittels vorgesehen sind, wobei das Strukturbauteil während eines Betriebs der Windenergieanlage zumindest teilweise dynamisch belastet wird und wenigstens eine Befestigungsausnehmung in einem während des Betriebs der Windenergieanlage dynamisch belasteten Bereich liegt, und wobei die Windenergieanlage in wenigstens zwei Zuständen betreibbar ist, wobei ein erster Zustand ein Betriebszustand ist und ein zweiter Zustand ein Wartungszustand, wobei im Betriebszustand das Verstärkungselement mittels definiert vorgespannter Schraubverbindungen mit in zumindest einen Teil der zur Befestigung eines Betriebsmittels vorgesehenen Befestigungsausnehmungen eingebrachten Schraub-Befestigungsmittel mit dem Befestigungsabschnitt des Strukturbauteils verschraubt ist, und wobei im Wartungszustand die Schraubverbindungen gelöst sind und das Verstärkungselement von dem Strukturbauteil der Tragstruktur entfernt ist, und über die zur Befestigung eines Betriebsmittels vorgesehenen Befestigungsausnehmungen ein Betriebsmittel mit dem Befestigungsabschnitt des Strukturbauteils verbindbar ist.

Durch die im Betriebszustand vorgesehene Verschraubung des Verstärkungselements mit dem Strukturbauteil lässt sich eine günstigere Spannungsverteilung in der Tragstruktur bei im Betrieb auftretenden Kräften erreichen, wodurch sich insbesondere eine höhere Betriebsfestigkeit erreichen lässt. Dies ist insbesondere auf eine Versteifung durch das zusätzliche Verstärkungselement zurückzuführen sowie auf das Ausfüllen zumindest einiger der vorhandenen Befestigungsausnehmungen durch entsprechende Schraub-Befestigungsmittel.

Durch eine entsprechende Ausgestaltung, insbesondere eine entsprechend geeignete Werkstoffwahl des Verstärkungselements und der Tragstruktur, und eine entsprechende Dimensionierung der zugehörigen Schraubverbindungen lässt sich eine insbesondere durch die Befestigungsausnehmungen hervorgerufene Kerbwirkung im Strukturbauteil reduzieren, was insbesondere in geringeren Spannungsüberhöhungen im Bereich um die Befestigungsausnehmungen herum resultiert.

Bevorzugt sind die Tragstruktur, insbesondere das Strukturbauteil und/oder das Verstärkungselement, aus Stahl hergestellt, das Strukturbauteil insbesondere aus Gussstahl, während das Verstärkungselement insbesondere aus Walzstahl hergestellt ist.

Durch das Einbringen von Schraub-Befestigungsmitteln in die Befestigungsausnehmungen sowie durch das Abdecken des Strukturbauteils mittels eines Verstärkungselements können ferner Flächen des Strukturbauteils außerdem vor Verschmutzungen und/oder vor Korrosion geschützt werden.

Die Verwendung eines separaten Verstärkungselementes gegenüber einer bloßen Wandstärkenerhöhung des Strukturbauteils hat ferner den Vorteil, dass eine Dicke des Verstärkungselements flexibel gewählt werden kann, und dass insbesondere ohne entsprechende, beispielsweise zur Wartung der Windenergieanlage vorhandene oder vorgesehene Betriebsmittel anpassen zu müssen oder für die Befestigung eines oder mehrerer Betriebsmittel entsprechende Adapter bereitzustellen, welche bei einer größeren Wandstärke des Strukturbauteils in einigen Fällen aufgrund der anderen Bauraumverhältnisse, insbesondere durch den größeren Platzbedarf des Strukturbauteils, andernfalls eventuell erforderlich werden könnten.

Somit ermöglicht die Verwendung eines separaten Verstärkungselementes, welches im Betriebszustand mit dem Strukturbauteil über die zur Befestigung eines Betriebsmittels vorgesehenen Befestigungsausnahmen mit dem Strukturbauteil verschraubt ist, anstelle eines größer dimensionierten Strukturbauteils zum einen eine flexible Verstärkung, welche sich einfach durch eine Anpassung des Verstärkungselements, beispielsweise eine größere Dicke des Verstärkungselements, erreichen lässt.

Zum anderen ermöglicht die erfindungsgemäße Verwendung eines separaten Verstärkungselementes die Verwendung eines Betriebsmittels für unterschiedliche Windenergieanlagen, insbesondere zur Wartung unterschiedlicher Windenergieanlagen mit unterschiedlichen Dimensionen und Abmessungen der Tragstruktur, insbesondere des Strukturbauteils, bei gleicher Lage des Befestigungsabschnitts, beispielsweise relativ zum Rotor und/oder zur Rotorwelle oder dergleichen.

Unter einer "Windenergieanlage" wird im Sinne der vorliegenden Erfindung eine Anlage zur Wandlung von Windenergie in eine Nutzenergie, insbesondere elektrische Energie, verstanden.

Unter einer "Tragstruktur" wird im Sinne der vorliegenden Erfindung eine Struktur verstanden, welche für die Standfestigkeit der Windenergieanlage eine tragende Funktion aufweist und somit bei der Festigkeitsauslegung der Windenergieanlage zu beachten ist und welche insbesondere für die Festigkeit der Windenergieanlage von Bedeutung ist und welche bevorzugt nach bestimmten Vorgaben, insbesondere gesetzlichen Vorgaben, hinsichtlich ihrer Festigkeit auszulegen ist.

Tragstrukturen einer Windenergieanlage sind beispielsweise Bauteile oder Baugruppen wie die Rotornabe, ein Rotorblattextender, die Rotorwelle, ein Rotorlagerbock oder der Maschinenträger.

Unter einem "Strukturbauteil" wird im Sinne der vorliegenden Erfindung ein Bauteil verstanden, welches eine Tragstruktur bildet oder Teil einer Tragstruktur ist.

Unter einem "Verstärkungselement" wird im Sinne der vorliegenden Erfindung ein Bauteil verstanden, welches zur Verstärkung eines anderen Bauteils dient, insbesondere zur Verstärkung eines Strukturbauteils.

Unter einer "dynamischen Belastung" wird im Sinne der vorliegenden Erfindung eine zeitlich veränderliche Belastung verstanden, während im Unterschied dazu unter einer "statischen Belastung" eine zeitlich im Wesentlichen konstante Belastung verstanden wird oder eine sich über eine längere, definierte Zeitspanne nicht oder nur kaum ändernde Belastung. Wenigstens ein Betriebsmittel, welches mit dem Befestigungsabschnitt des Strukturbauteils verbindbar ist, ist besonders bevorzugt mit dem Strukturbauteil verschraubbar, insbesondere mittels definiert vorgespannter Schraubverbindungen mit über zumindest in einen Teil der zur Befestigung des Betriebsmittels vorgesehenen Befestigungsausnehmungen einbringbaren Schraub-Befestigungsmitteln.

Die Schraub-Befestigungsmittel, mit denen das Betriebsmittel mit dem Strukturbauteil verschraubt werden kann, können die gleichen Schraub-Befestigungsmittel sein wie diejenigen, mit welchen das Verstärkungselement im Betriebszustand mit dem Strukturbauteil verschraubt ist. In einigen Fällen kann es jedoch vorteilhafter sein, für eine Verschraubung eines Betriebsmittels mit dem Strukturbauteil andere Schraub-Befestigungsmittel vorzusehen, beispielsweise mit einer anderen Länge (der Durchmesser sollte aufgrund der gleichen verwendeten Befestigungsausnehmungen bevorzugt identisch sein).

Gemäβ der vorliegenden Erfindung ist das Strukturbauteil, insbesondere der Befestigungsabschnitt, zur Befestigung eines Betriebsmittels, insbesondere einer Wartungsvorrichtung, für und/oder während einer Durchführung von Wartungsarbeiten ausgebildet, wobei das Betriebsmittel vorzugsweise ein Hebezeug oder ein Wartungshilfsmittel ist, insbesondere eine Abstützvorrichtung, welche zur Abstützung einer oder mehrerer Teile der Windenergieanlage ausgebildet ist, wie beispielsweise eine Abstützvorrichtung zur Abstützung eines Rotors, einer Rotornabe, einer Rotorwelle oder eines Getriebes oder Generators der Windenergieanlage im Wartungszustand. Das Betriebsmittel kann dabei insbesondere eine Halteklammer sein, beispielsweise eine Rotorhalteklammer, wie sie aus dem Stand der Technik grundsätzlich bekannt ist und bei Wartungsarbeiten zur Wartung von Windenergieanlagen eingesetzt wird,

beispielsweise bei einem Komponententausch, wie einem Getriebetausch oder einem Rotorwellentausch.

In einer weiteren vorteilhaften Ausgestaltung einer erfindungsgemäßen Windenergieanlage weist der Befestigungsabschnitt wenigstens eine Funktionsoberfläche auf, und zumindest einige der Befestigungsausnehmungen, insbesondere sämtliche der Befestigungsausnehmungen des Befestigungsabschnitts, erstrecken sich ausgehend von der Funktionsoberfläche, vorzugsweise quer, insbesondere senkrecht, zur Funktionsoberfläche.

Der Befestigungsabschnitt des Strukturbauteils ist bevorzugt ein Flanschabschnitt oder weist einen Flanschabschnitt auf, wobei der Flanschabschnitt insbesondere wenigstens eine Funktionsfläche aufweist, beispielsweise eine Kontaktfläche, eine Anlagefläche, eine Abstützfläche oder eine Dichtfläche, wobei sich wenigstens eine Befestigungsausnehmung insbesondere ausgehend von dem Flanschabschnitt erstreckt, insbesondere ausgehend von einer Funktionsfläche des Flanschabschnitts, vorzugsweise quer, insbesondere senkrecht, zur Funktionsfläche. Besonders bevorzugt verlaufen sämtliche der Befestigungsausnehmungen senkrecht zu einer zugehörigen Funktionsfläche des Befestigungsabschnitts des Strukturbauteils.

Insbesondere in diesem Fall kann durch das Verschrauben eines Verstärkungselements mit dem Befestigungsabschnitt über die in den Befestigungsabschnitt eingebrachten Befestigungsausnehmungen, die im Wesentlichen zur Verbindung eines Betriebsmittels mit dem Strukturbauteil vorgesehen sind, eine vorteilhafte Spannungsverteilung erreicht werden, da insbesondere durch derartig in den Befestigungsabschnitt eingebrachte Befestigungsausnehmungen im Fall einer quer zu den Befestigungsausnehmungen aufgebrachten Zugbelastung um die Befestigungsausnehmungen herum erhebliche Spannungsüberhöhungen auftreten können.

In einer bevorzugten Ausgestaltung einer Windenergieanlage gemäß der vorliegenden Erfindung liegt das Verstärkungselement dabei zumindest teilweise an der Funktionsfläche des Befestigungsabschnitts an, insbesondere zumindest teilweise flächig, vorzugsweise vollständig flächig, das heißt mit wenigstens einer Fläche vollständig, insbesondere beispielsweise einer Unterseite. Hierdurch kann eine gute flächige Anlage des Verstärkungselements am Strukturbauteil und damit eine gute Versteifung der Tragstruktur bewirkt werden. Zum anderen lässt sich eine gute Abdeckung und damit ein guter Schutz vor Verschmutzung und Korrosion des Strukturbauteils erreichen.

In einer weiteren vorteilhaften Ausgestaltung einer erfindungsgemäßen Windenergieanlage wird das Strukturbauteil während des Betriebs der Windenergieanlage zumindest teilweise dynamisch auf Zug belastet, insbesondere mit einer Belastungsrichtung quer, insbesondere senkrecht, zur Erstreckungsrichtung der Befestigungsausnehmungen, insbesondere parallel zur Funktionsoberfläche. D.h. bevorzugt handelt es sich bei dem Strukturbauteil um ein Bauteil, welches während des Betriebs der Windenergieanlage zumindest teilweise dynamisch auf Zug belastet, insbesondere mit einer Belastungsrichtung quer, insbesondere senkrecht, zur Erstreckungsrichtung der Befestigungsausnehmungen belastet wird.

Insbesondere in diesem Fall lässt sich durch das erfindungsgemäße Verschrauben eines Verstärkungselements mit dem Strukturbauteil über die Befestigungsausnehmungen, die zur Befestigung eines Betriebsmittels vorgesehen sind und somit im Betriebszustand normalerweise nicht benutzt werden, im Betriebszustand eine erheblich günstigere Spannungsverteilung erreichen, da durch das Verschrauben des Verstärkungselements mit dem Strukturbauteil über die Befestigungsausnehmungen Spannungsüberhöhungen, insbesondere um die Befestigungsausnehmungen herum, auf diese Weise erheblich reduziert werden können, wodurch sich im Ergebnis eine höhere Betriebsfestigkeit erreichen lässt.

Besonders eignet sich die Verschraubung des Verstärkungselements über die zur Befestigung eines Betriebsmittels vorgesehenen Befestigungsausnehmungen im Strukturbauteil zur Reduzierung von Spannungsüberhöhungen bzw. zeigt dort besonders große Wirkung, wenn wenigstens eine der Befestigungsausnehmungen in einem hochdynamisch belasteten Bereich liegt, das heißt in einem stochastisch oder zyklisch dynamisch wechselnd und/oder dynamisch schwellend belasteten Bereich, wobei die erfindungsgemäße Maßnahme zur Verstärkung eines Strukturbauteils besonders vorteilhaft bei dynamisch schwellenden Zugbelastungen ist, insbesondere bei dynamisch schwellenden Zugbelastungen mit einer Zugbelastungsrichtung quer zu den Befestigungsausnehmungen, insbesondere bei Zugbelastungen senkrecht zu den Befestigungsausnehmungen bzw. parallel zur Funktionsoberfläche.

In einer weiteren vorteilhaften Ausgestaltung einer erfindungsgemäßen Windenergieanlage ist wenigstens eine Befestigungsausnehmung, insbesondere wenigstens eine Befestigungsausnehmung im Strukturbauteil, eine Durchgangsöffnung oder ein Durchgangsloch, wobei vorzugsweise wenigstens eine Schraubverbindung eine Durchsteckschraubverbindung ist.

Alternativ kann wenigstens eine Befestigungsausnehmung, insbesondere wenigstens eine Befestigungsausnehmung im Strukturbauteil, auch als Sacklochausnehmung ausgebildet sein, wobei die Sacklochausnehmung in diesem Fall insbesondere ein entsprechendes Innengewinde aufweist und insbesondere wenigstens eine Schraubverbindung eine Sacklochschraubverbindung ist, wobei in diesem Fall bevorzugt sowohl das Verstärkungselement als auch ein entsprechendes Betriebsmittel jeweils mittels einer Sacklochverschraubung über die Sacklochausnehmung mit dem Strukturbauteil verschraubt werden kann.

Denkbar ist auch, dass wenigstens eine Befestigungsausnehmung, insbesondere wenigstens eine Befestigungsausnehmung im Strukturbauteil und/oder wenigstens eine zugehörige Befestigungsausnehmung im Verstärkungselement, für eine Stehbolzen-Schraubverbindung bzw. eine Stehbolzenverschraubung ausgebildet ist, wobei für eine Stehbolzen-Schraubverbindung vorzugsweise sowohl das Strukturbauteil als auch das Verstärkungselement jeweils wenigstens eine zugehörige, als Sackloch ausgebildete Befestigungsausnehmung aufweisen.

Ist eine Befestigungsausnehmung hingegen als Durchgangsöffnung ausgebildet, insbesondere als Durchgangsbohrung, kann ein Innengewinde vorgesehen sein. Bevorzugt weist die Durchgangsöffnung jedoch kein Innengewinde auf, da sich mit einer glatten Innenwandung einer Bohrung geringere Spannungsüberhöhungen im Bereich um die Befestigungsausnehmungen herum ergeben und damit eine geringere Formzahl sowie ein geringerer Kerbfaktor, was sich wiederum positiv auf die Betriebsfestigkeit auswirkt, denn je geringer der Kerbfaktor ist, desto höher ist die erreichbare Betriebsfestigkeit.

Darüber hinaus hat eine Durchgangsöffnung, insbesondere eine Durchgangsbohrung, mit einer Durchsteckschraubverbindung den Vorteil, dass eine gesamte Länge der Schraubverbindung auf Druck vorgespannt werden kann, wodurch sich ein vorteilhafterer, insbesondere gleichmäßigerer Spannungszustand im Bereich um die Befestigungsausnehmung herum erreichen lässt.

In einer besonders vorteilhaften Ausgestaltung einer Windenergieanlage gemäß der vorliegenden Erfindung ist wenigstens eine Schraubverbindung, insbesondere wenigstens eine Schraubverbindung, mit welcher das Verstärkungselement mit dem Strukturbauteil über wenigstens eine Befestigungsausnehmung verschraubt ist, derart vorgespannt, dass in einem Bereich um die zugehörige Befestigungsausnehmung und die Schraubverbindung herum im unbelasteten Zustand der Tragstruktur ein Druckeigenspannungszustand vorliegt.

Durch das Einbringen eines Druckeigenspannungszustands in den Bereich um die Befestigungsausnehmung herum durch Vorspannen der Schraubverbindung mit einer definierten Vorspannkraft, das heißt durch ein definiertes Anziehen der Schraubverbindung, insbesondere drehmomentgesteuert oder winkelgesteuert, können insbesondere während des Betriebs auftretende Zugbelastungen zumindest teilweise kompensiert werden, je nach Höhe der Druckeigenspannungen.

Um einen möglichst großen Anteil der im Betrieb auftretenden Zugbelastungen, insbesondere quer zu den Befestigungsausnehmungen auftretenden Zugbelastungen, kompensieren zu können, ist wenigstens eine Schraubverbindung derart definiert vorgespannt, dass die infolge der Vorspannung der Schraubverbindung induzierten Druckeigenspannungen so groß sind, dass über wenigstens 50 % einer definierten Auslegungs-Betriebsdauer, vorzugsweise über wenigstens 75 %, insbesondere über 90 %, besonders bevorzugt über 95 %, insbesondere über die gesamte Auslegungs-Betriebsdauer, das heißt über 100 % der Auslegungs-Betriebsdauer der Windenergieanlage, in einem an die zugehörige Befestigungsausnehmung angrenzenden Bereich um die zugehörige Befestigungsausnehmung herum während eines Soll-Betriebs der Windkraftanlage quer zur Befestigungsausnehmung nur Zugspannungen, insbesondere im Ergebnis resultierende Zugspannungen, mit einer gegenüber einem Zustand ohne Druckeigenspannungen reduzierten Amplitude auftreten, insbesondere nur mit einer um ein definiertes Maß reduzierten Amplitude, beispielsweise nur Zugspannungen mit einer um wenigstens 20% oder wenigstens 30% oder um wenigstens 50% reduzierten Amplitude. Besonders bevorzugt ist die Vorspannung der Schraubverbindung dabei so groß gewählt, dass im Ergebnis quer zur Befestigungsausnehmung nur noch resultierende Zugspannungen mit einer um mehr als 80% reduzierten Zugspannungsamplitude auftreten.

Unter einem "Soll-Betrieb" wird vorliegend ein Betrieb verstanden, in welchem lediglich Kräfte auftreten, welche als normale Betriebskräfte bei der Auslegung berücksichtigt worden sind, das heißt keine in einem Missbrauchsfall auftretenden Kräfte sowie keine unvorhergesehen großen Kräfte, welche bei der Auslegung der Windenergieanlage nicht berücksichtigt worden sind oder nicht zu berücksichtigen sind, entsprechend den zu erfüllenden Vorgaben, insbesondere nach den zu erfüllenden gesetzlichen Anforderungen an die Auslegung einer Windenergieanlage.

In einer weiteren vorteilhaften Ausgestaltung einer erfindungsgemäßen Windenergieanlage ist im Betriebszustand der Windenergieanlage eine primäre Funktion des Verstärkungselement eine Verstärkung des Strukturbauteils, mit welchem das Verstärkungselement verschraubt ist. D.h., bevorzugt dient das Verstärkungselement nicht als Träger oder Tragstruktur für eine Baugruppe oder ein weiteres Bauteil, sondern ist insbesondere hauptsächlich zur Verstärkung des Strukturbauteils vorgesehen und ausgebildet, wobei eine Abdeckung der Befestigungsausnehmungen durch das Verstärkungselement vorliegend insbesondere nur als Nebenfunktion bzw. sekundäre Funktion angesehen wird.

In einer weiteren vorteilhaften Ausgestaltung einer erfindungsgemäßen Windenergieanlage weist das Verstärkungselement eine Kontaktfläche auf und liegt mit dieser im Betriebszustand der Windenergieanlage flächig am Strukturbauteil an, vorzugsweise am Befestigungsabschnitt des Strukturbauteils, insbesondere an der Funktionsfläche des Befestigungsabschnitts des Strukturbauteils, wobei das Verstärkungselement vorzugsweise mit einer zusammenhängenden Kontaktfläche am Strukturbauteil oder einer Strukturbaugruppe anliegt, insbesondere mit einer einzigen, zusammenhängenden Kontaktfläche. D.h., in einer möglichen, insbesondere vorteilhaften Ausgestaltung, ist das Verstärkungselement beispielsweise nicht brückenartig oder dergleichen ausgebildet und überspannt nicht wie eine Brücke, beispielweise wie eine Lageraufnahme, einen zwischen zwei Befestigungsabschnitten liegenden Bereich.

Insbesondere ist das Verstärkungselement bevorzugt weder ein Träger noch eine Aufnahme zur Anbindung, Befestigung oder Aufnahme eines weiteren Bauteils.

In einer weiteren vorteilhaften Ausgestaltung einer erfindungsgemäßen Windenergieanlage ist das Verstärkungselement bevorzugt plattenartig oder plattenförmig ausgebildet oder eine Platte, insbesondere eine Stahlplatte. Hierdurch kann zum einen mit geringem Bauraumbedarf und einem im Verhältnis geringen Zusatzgewicht eine gute flächige Abdeckung des Befestigungsabschnitts erreicht werden, insbesondere einer zugehörigen Funktionsoberfläche, was insbesondere ermöglicht, ein Verstärkungselement über möglichst viele Befestigungsausnehmungen mit dem Strukturbauteil zu verschrauben, wodurch wiederum möglichst viele Befestigungsausnehmungen mit einem Schraub-Befestigungsmittel ausgefüllt werden können. Dies wiederum wirkt sich vorteilhaft auf die Spannungsverteilung in der Tragstruktur, insbesondere im Strukturbauteil, aus.

In einer besonders vorteilhaften Ausgestaltung einer Windenergieanlage gemäß der vorliegenden Erfindung weist das Verstärkungselement dabei eine Dicke von wenigstens 10 %, insbesondere von wenigstens 15 %, vorzugsweise von wenigstens 20 %, insbesondere von wenigstens 30 % einer mittleren Wandstärke des Befestigungsabschnitts in einem durch das Verstärkungselement verstärkten Bereich auf, höchstens jedoch eine Dicke von 40 %, 50 % oder 100 % der mittleren Wandstärke des Befestigungsabschnitts in diesem Verstärkungsbereich.

Es hat sich gezeigt, dass mit diesen Größenordnungen, das heißt mit einem derartigen Verhältnis von einer Dicke des Verstärkungselements zur Wandstärke des Strukturbauteils, bereits gute Effekte erzielen lassen, insbesondere eine vorteilhafte Erhöhung der Betriebsfestigkeit des Strukturbauteils und damit der Tragstruktur.

In einer weiteren vorteilhaften Ausgestaltung einer Windenergieanlage gemäß der vorliegenden Erfindung ist wenigstens eine Umfangsseitenfläche des Verstärkungselements als Fase ausgebildet, insbesondere sämtliche Umfangsseitenflächen, insbesondere mit einem Innenwinkel von höchstens 60°, 45°, 30°, 20° oder 15°, und vorzugsweise wenigstens 10°, insbesondere mit jedoch wenigstens 15°, zu einer zwischen dem Befestigungsabschnitt und dem Verstärkungselement verlaufenden Trennebene. Hierdurch lässt sich ein besonders vorteilhafter Querschnittsübergang vom Strukturbauteil in den Verstärkungsbereich, in welchem das Strukturbauteil mit dem Verstärkungselement verstärkt wird, erreichen, was sich vorteilhaft auf die Spannungsverteilung in der Tragstruktur auswirkt. Insbesondere können auf diese Weise große Spannungsgradienten reduziert werden und ein vorteilhafterer Spannungsverlauf in der Tragstruktur erreicht werden.

In einigen Fällen kann es auch vorteilhaft sein, wenn wenigstens eine Umfangsseitenfläche des Verstärkungselements wie eine Hohlkehle ausgebildet ist.

Ein zweiter Aspekt der Erfindung betrifft ein erfindungsgemäßes Verfahren zum Betreiben, insbesondere zum Warten, einer erfindungsgemäßen Windenergieanlage und ist gekennzeichnet durch die Schritte:
a) Überführen der Windenergieanlage von einem Betriebszustand in einen Wartungszustand durch Lösen der Schraubverbindungen, mittels welcher das Verstärkungselement mit dem Strukturbauteil verschraubt ist, und Entfernen des Verstärkungselements,
b) Durchführen von Wartungsarbeiten, und
c) Überführen der Windenergieanlage vom Wartungszustand in den Betriebszustand durch Bereitstellen des Verstärkungselements oder eines Ersatz-Verstärkungselements und Verbinden des Verstärkungselements oder des Ersatz-Verstärkungselements mit dem Befestigungsabschnitt des Strukturbauteils durch Einbringen von Schraub-Befestigungsmitteln in zumindest einen Teil der zur Befestigung eines Betriebsmittels vorgesehenen Befestigungsausnehmungen und Verschrauben des Verstärkungselements oder des Ersatz-Verstärkungselements mit dem Befestigungsabschnitt des Strukturbauteils mittels definiert vorgespannter Schraubverbindungen.

Weist der Befestigungsabschnitt des Strukturbauteils eine entsprechende Funktionsfläche auf, wird das Verstärkungselement oder das Ersatz-Verstärkungselement dabei bevorzugt insbesondere derart bereitgestellt und angeordnet, dass es vor dem Verschrauben mit dem Strukturbauteil zumindest teilweise an der Funktionsoberfläche des Befestigungsabschnitts des Strukturbauteils anliegt.

In einer besonders vorteilhaften Ausgestaltung eines Verfahrens gemäß der vorliegenden Erfindung weist das Verfahren ferner die folgenden Schritte auf:
i) Bereitstellen eines Betriebsmittels,
ii) Verbinden des Betriebsmittels mit dem Befestigungsabschnitt des Strukturbauteils über die zur Befestigung eines Betriebsmittels vorgesehenen Befestigungsausnehmungen,
iii) Lösen der Verbindung des Betriebsmittels mit dem Befestigungsabschnitt des Strukturbauteils, und
iv) Entfernen des Betriebsmittels,
wobei die Schritte i) und ii) vorzugsweise vor Schritt b) durchgeführt werden und die Schritte iii) und iv) vorzugsweise nach Schritt b).

Hierdurch lässt sich auf einfache Art und Weise insbesondere mit bereits verfügbaren Betriebsmitteln eine Wartung der Windenergieanlage durchführen, wobei die Windenergieanlage gleichzeitig vorteilhaft im Hinblick auf ihre Betriebsfestigkeit ausgestaltet ist.

In einer weiteren vorteilhaften Ausgestaltung eines Verfahrens gemäß der vorliegenden Erfindung erfolgt das Verbinden des Betriebsmittels mit dem Befestigungsabschnitt des Strukturbauteils in Schritt ii) dabei über die zur Befestigung eines Betriebsmittels vorgesehenen Befestigungsausnehmungen durch Einbringen von Schraub-Befestigungsmitteln in zumindest einen Teil der zur Befestigung des Betriebsmittels vorgesehenen Befestigungsausnehmung und Verschrauben des Betriebsmittels mit dem Strukturbauteil mittels definiert vorgespannter Schraubverbindungen.

Durch den Verschluss von während eines im Betriebszustand, insbesondere während eines Normalbetriebs, normalerweise ungenutzten Ausnehmungen, welche insbesondere lediglich zur Befestigung von entsprechenden Betriebsmitteln vorgesehen sind, beispielsweise im Wartungsfall, durch das Verschrauben eines Verstärkungselements mit dem Strukturbauteil einer Tragstruktur, können zum einen die Befestigungsausnehmungen abgedeckt und damit besser vor Korrosion geschützt werden. Zum anderen lässt sich eine erheblich vorteilhaftere Spannungsverteilung im Strukturbauteil erreichen und damit eine höhere Betriebsfestigkeit.

Werden die Schraubverbindungen, mit welchen das Verstärkungselement mit dem Strukturbauteil verschraubt wird, dabei derart definiert vorgespannt, dass sich ein Druckeigenspannungszustand einstellt, kann die Betriebsfestigkeit weiter erhöht werden, insbesondere wenn Durchsteckschraubverbindungen verwendet werden, das heißt Durchsteckverschraubungen. Insbesondere für den Fall von dynamisch auftretenden Zugbelastungen, insbesondere dynamisch schwellen Zugbelastungen, insbesondere mit einer Zugbelastungsrichtung quer zu den Befestigungsausnehmungen, lässt sich die Betriebsfestigkeit dadurch auf einfache Art und Weise vorteilhaft verbessern.

Werden die Schaubverbindungen dabei derart definiert vorgespannt, dass die induzierten Druckeigenspannungen so hoch sind, dass bei wenigstens 90 %, bevorzugt wenigstens 95 %, der Auslegungs-Betriebsdauer keine Zugspannungen im Bereich um die Befestigungsausnehmungen herum auftreten, lässt sich die Betriebsfestigkeit deutlich gegenüber einer Tragstruktur nur mit einem Strukturbauteil ohne Verstärkungselement und entsprechenden Befestigungsausnehmungen verbessern.

Die in Bezug auf die Windenergieanlage und deren vorteilhafte Ausgestaltungen beschriebenen Merkmale und Vorteile gelten, zumindest sofern technisch sinnvoll, auch für den zweiten Aspekt der Erfindung und somit auch für ein erfindungsgemäßes Verfahren zum Betrieb einer solchen Windenergieanlage und dessen vorteilhafte Ausgestaltungen sowie umgekehrt.

Die Erfindung wird im Folgenden anhand von nicht einschränkenden Ausführungsbeispielen, die in den Figuren schematisch dargestellt sind, näher erläutert. Darin zeigen wenigstens teilweise schematisch:
- **Fig. 1**: einen Teilschnitt durch eine Tragstruktur einer erfindungsgemäßen Windenergieanlage mit einem Strukturbauteil und einem Verstärkungselement, wobei das Verstärkungselement über zur Befestigung eines Betriebsmittels im Wartungszustand der Windenergieanlag vorgesehene Befestigungsausnehmungen mit dem Strukturbauteil verschraubt ist,
- **Fig. 2**: das Strukturbauteil aus Fig. 1 in Einzelteildarstellung in Ansicht von oben, und
- **Fig. 3**: das Strukturbauteil aus den Fig. 1 und 2 in perspektivischer Darstellung.

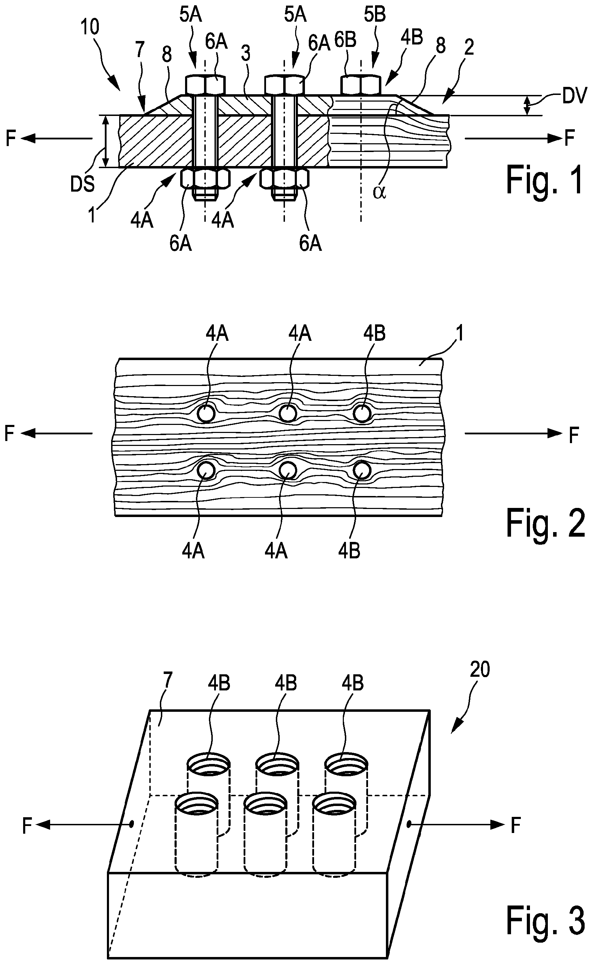

**Figur 1** zeigt einen Teilschnitt durch eine Tragstruktur 10 einer hier nicht weiter dargestellten, erfindungsgemäßen Windenergieanlage, wobei die Tragstruktur ein Strukturbauteil 1, welches in diesem Fall durch den Maschinenträger der Windenergieanlage gebildet ist, sowie ein Verstärkungselement 3 aufweist, welches über zur Befestigung eines Betriebsmittels im Wartungszustand vorgesehene Befestigungsausnehmungen 4A und 4B mit dem Strukturbauteil 1, das heißt in diesem Fall mit dem Maschinenträger 1, verschraubt ist.

Der linke Teil der Darstellung in Fig. 1 zeigt dabei die Tragstruktur 10 in einem Schnitt, während im rechten Teil ein Spannungsverlauf innerhalb der Tragstruktur 10 dargestellt ist, wie er unter einer Zugbelastung F, wie durch die Pfeile angedeutet, zu erwarten ist.

Die Tragstruktur 10 ist in Fig. 1 dabei in einem Betriebszustand dargestellt, in welchem die Befestigungsausnehmungen 4A und 4B zur Verschraubung des Strukturbauteils 1 mit dem Verstärkungselement 3 dienen, während in einem hier nicht dargestellten Wartungszustand (vgl. Fig. 2 und Fig. 3) die Befestigungsausnehmungen 4A und 4B zur Befestigung eines Betriebsmittels, beispielsweise eines Hebezeugs oder einer Abstützungsvorrichtung, wie beispielsweise einer Halteklammer, insbesondere einer Rotorhalteklammer, frei sind, d.h. nicht belegt sind, und insbesondere zur Verschraubung des Betriebsmittels genutzt werden können.

Zur Verschraubung des Strukturbauteils 1 mit dem Verstärkungselement 3 weist das Strukturbauteil 1 insbesondere einen Befestigungsabschnitt 2 auf, welcher bei diesem Ausführungsbeispiel ein Flanschabschnitt ist mit einer Funktionsfläche 7 an der Oberseite, welche insbesondere die Funktion einer Abstützfläche hat für ein in einem Wartungszustand mit dem Strukturbauteil 1, das heißt dem Maschinenträger 1, verbindbares Betriebsmittel, wie beispielsweise einer Rotorhalteklammer.

Die Befestigungsausnehmungen 4A und 4B gehen dabei insbesondere von der Funktionsoberfläche 7 aus und erstrecken sich quer, insbesondere senkrecht, zur Funktionsoberfläche 7.

Das Verstärkungselement 3 und das Strukturbauteil 1 sind dabei mittels in die Befestigungsausnehmungen 4A und 4B eingebrachte Schraub-Befestigungsmittel 6A und 6B miteinander verschraubt, wobei die beiden weiter links dargestellten Schraubverbindungen 5A und 5B jeweils Durchsteck-Schraubverbindungen sind, während die Schraubverbindung 5B eine Sacklochverschraubung ist.

Zum Herstellen der Durchsteck-Schraubverbindungen 5A weisen sowohl das Verstärkungselement 3 und das Strukturbauteil 1 jeweils entsprechende Befestigungsausnehmungen 4A in Form von Durchgangsöffnungen 4A, insbesondere Durchgangsbohrungen 4A, auf, welche bei diesem Ausführungsbeispiel eine glatte Innenwandung aufweisen, das heißt kein Innengewinde.

Im Unterschied dazu ist die Schraubverbindung 5B eine Sacklochverschraubung, bei welcher das Verstärkungselement 3 zwar ebenfalls eine entsprechende Durchgangsbohrung zum Hindurchführen des zugehörigen Schraub-Befestigungsmittels 6B, insbesondere der Schraube 6B, aufweist, in dem Strukturbauteil 1 ist jedoch eine entsprechende, zugehörige Sacklochbohrung 4B vorgesehen, welche in diesem Fall ein entsprechendes Innengewinde aufweist.

Die unterschiedliche Ausgestaltung der Schraubverbindungen 5A und 5B dient bei diesem Ausführungsbeispiel im Wesentlichen lediglich einer Veranschaulichung der unterschiedlichen Möglichkeiten zur Ausgestaltung einer oder mehrerer Schraubverbindungen 5A, 5B zum Verschrauben des Verstärkungselements 3 mit dem Strukturbauteil 1.

Statt wie hier in Fig. 1 gezeigt können auch sämtliche Schraubverbindungen der Tragstruktur zum Verschrauben des Verstärkungselements 3 mit dem Strukturbauteil 1 jeweils als Durchsteck-Schraubverbindungen 5A ausgestaltet sein oder als Sacklochverschraubung 5B, das hängt in der Regel vom jeweiligen Anwendungsfall ab und von den Bauraumverhältnissen. So kann es beispielsweise sein, dass in einigen Fällen eine Durchsteck-Schraubverbindung 5A aus Platzgründen nicht möglich ist, sondern sich lediglich eine Sacklochverschraubung 5B realisieren lässt. Denkbar sind grundsätzlich auch Stehbolzen-Schraubverbindungen.

Durchsteckverbindungen 5A haben gegenüber Sacklochverschraubungen 5B den Vorteil, dass über die gesamte Länge der Schraubverbindung und in diesem Fall damit auch über die gesamte Dicke der Tragstruktur 10, welche sich zusammensetzt aus einer Dicke DS des Strukturbauteils 1 und einer Dicke DV des Verstärkungselements 3, durch eine definiert eingebrachte Vorspannung der Schraubverbindungen 5A, insbesondere bei einer ausreichend großen Vorspannung der Schraubverbindungen 5A, um die Befestigungsausnehmungen 4A herum ein Druckeigenspannungszustand erzeugt werden kann, während bei einer Sacklochverschraubung 5B nur über einen Teil der gesamten Dicke DS + DV der Tragstruktur 10 im Bereich der Schraubverbindung 5B ein Druckeigenspannungszustand induzierbar ist, nämlich nur im Bereich der Schraube, nicht jedoch über deren Länge hinaus.

Wie in Fig. 1 über die mit "F" bezeichneten Kraftpfeile F angedeutet ist, wird die Tragstruktur 10, insbesondere das Strukturbauteil 1, während des Betriebs der Windenergieanlage zumindest teilweise dynamisch auf Zug belastet, wobei in diesem Fall das Strukturbauteil 1 mit einer Belastungsrichtung quer, insbesondere senkrecht, zur Erstreckungsrichtung der Befestigungsausnehmungen 4A und 4B belastet wird.

Sämtliche der Befestigungsausnehmungen 4A und 4B befinden sich dabei in einem hochdynamisch belasteten Bereich des Befestigungsabschnitts 2, das heißt in einem stochastisch oder zyklisch dynamisch wechselnd und/oder dynamisch schwellend belasteten Bereich, wobei sich die Befestigungsausnehmungen 4A und 4B in diesem Fall in einem dynamisch schwellend mit Zug belasteten Bereich befinden mit einer Belastungsrichtung quer, insbesondere senkrecht, zu der Längsachse der Befestigungsausnehmungen 4A und 4B.

Um einen großen Anteil der während des Betriebs auf die Tragstruktur 10, insbesondere das Strukturbauteil 1, wirkenden Zugbelastung zumindest teilweise zu kompensieren, sind die Schraubverbindungen 5A und 5B jeweils derart vorgespannt, insbesondere die Schraubverbindungen 5A, dass in einem Bereich um die zugehörige Befestigungsausnehmungen 4A bzw. 4B herum im unbelasteten Zustand der Tragstruktur 10 jeweils ein Druckeigenspannungszustand vorliegt.

Die Vorspannkraft ist dabei insbesondere derart gewählt, dass über wenigstens 90 % einer gesamten Auslegungs-Betriebsdauer der zugehörigen Windenergieanlage während eines Soll-Betriebs keine Zugspannungen quer zu den Befestigungsausnehmungen 4A und 4B um diese herum, insbesondere in einem an die Ausnehmungen 4A und 4B angrenzenden Bereich, auftreten.

Durch die durch die Vorspannung der Schraubverbindungen 5A und 5B induzierten Druckeigenspannungen können kritische Zugspannungen zumindest teilweise ausgeglichen werden, was sich vorteilhaft auf die Betriebsfestigkeit auswirkt und insbesondere zu höheren Betriebsfestigkeitswerten führt.

Durch das zusätzliche Verstärken des Strukturbauteils 1 mit dem Verstärkungselement 3 lässt sich die Spannungsverteilung in der Tragstruktur 10 ferner weiter verbessern und dadurch die Betriebsfestigkeit noch weiter erhöhen.

Durch die Verwendung der ohnehin zur Befestigung wenigstens eines Betriebsmittels erforderlichen Befestigungsausnehmungen 4A und 4B in dem Strukturbauteil 1 sind zum einen zur Verstärkung des Strukturbauteils 1 keine zusätzlichen Befestigungsausnehmungen erforderlich. Zum anderen bewirkt das Verwenden der ansonsten ungenutzten und damit offenen Befestigungsausnehmungen 4A und 4B, welche im Betrieb nicht benötigt werden und lediglich zu Wartungszwecken dienen, insbesondere das Einbringen der Schraub-Befestigungsmittel 6A bzw. 6B in die Befestigungsausnehmungen 4A und 4B, außerdem, dass diese ausgefüllt werden, was sich ebenfalls vorteilhaft auf die Spannungsverteilung im Strukturbauteil 1, insbesondere im Befestigungsabschnitt 2, auswirkt.

Insbesondere können auf diese Art und Weise normalerweise um die Befestigungsausnehmungen 4A und 4B herum aufgrund der durch die Befestigungsausnehmungen 4A und 4B hervorgerufenen Kerbwirkung entstehende Spannungsüberhöhungen reduziert werden und somit Spannungskonzentrationen um die Befestigungsausnehmungen 4A und 4B herum reduziert werden. Dadurch kann vor allem die Wahrscheinlichkeit einer Rissentstehung im Bereich der Befestigungsausnehmungen 4A und 4B reduziert werden.

Es hat sich herausgestellt, dass sich eine besonders vorteilhafte Tragstruktur 10 erreichen lässt, insbesondere eine besonders bauraumsparende Tragstruktur, wenn das Verstärkungselement 3 dabei plattenartig ausgebildet ist oder eine Platte ist, wie in Fig. 1 beispielhalber gezeigt.

Auf diese Weise lässt sich außerdem mit Hilfe des Verstärkungselements 3 nicht nur eine Verstärkung des Strukturbauteils 1 herbeiführen, sondern außerdem die Funktionsfläche 7 großflächig abdecken, wodurch die Funktionsfläche 7 vor Verschmutzungen und Korrosion geschützt werden kann.

Das Einbringen der Schraub-Befestigungsmittel 5A und 5B in die Befestigungsausnehmungen 4A und 4B hat ebenfalls den Vorteil, dass die Befestigungsausnehmungen 4A und 4B nicht mehr offenliegen und somit während des Betriebs ebenfalls besser vor Verschmutzungen und Korrosion geschützt werden können.

Um einen möglichst vorteilhaften Spannungsverlauf unter Belastung in der Tragstruktur 10 zu erreichen, ist es vorteilhaft, wenn, wie in Fig. 1 dargestellt, wenigstens eine Umfangsseite des Verstärkungselements 3 eine Fase 8 aufweist, insbesondere eine Fase mit einem Innenwinkel α zwischen 10 und 60°, wobei sich ein Innenwinkel α von 30°, wie hier beispielhalber dargestellt, als vorteilhaft herausgestellt hat. Mit Hilfe dieser Fasen 8 an den Umfangsseitenflächen lässt sich eine vorteilhafte Querschnittserhöhung der Tragstruktur 10 erreichen und infolgedessen ein vorteilhafter Spannungsverlauf innerhalb der Tragstruktur 10. Insbesondere können hohe Spannungsgradienten, insbesondere Sprünge im Spannungsverlauf, vermieden werden.

Statt einer Fase 8 könnte auch wenigstens eine Umfangsseitenfläche hohlkehlenförmig ausgebildet sein oder dergleichen. Dadurch lässt sich möglicherweise in einigen Fällen ein noch weiter verbesserter Spannungsverlauf innerhalb der Tragstruktur 10 erreichen.

Die Dicke DV des Verstärkungselements 3 beträgt bei diesem Ausführungsbeispiel einer Tragstruktur 10 einer erfindungsgemäßen Windenergieanlage dabei 30 % der Dicke DS des Strukturbauteils 1.

**Figur 2** zeigt das Strukturbauteil 1 der Tragstruktur 10 aus Fig. 1 in einem Wartungszustand, in welchem die Schraubverbindungen 5A und 5B gelöst sind und das Verstärkungselement 3 entfernt ist, so dass über die Befestigungsausnehmungen 4A und 4B ein nicht dargestelltes Betriebsmittel mit dem Strukturbauteil 1 verbunden werden kann, insbesondere zu Wartungszwecken.

Zusätzlich ist in Figur 2 ein Spannungsverlauf innerhalb des Strukturbauteils 1 dargestellt, wie er unter einer Zugbelastung F, wie durch die Pfeile angedeutet, zu erwarten ist. Zu erkennen ist, dass die Kraftlinien die offenen Löcher in Form der, Befestigungsausnehmungen 4A und 4B umgehen müssen, wodurch es zu erheblichen Spannungskonzentrationen (der Abstand der Kraftlinien ist ein Maß für die Spannung im Bauteil) im Bereich der Befestigungsausnehmungen 4A und 4B kommt.

**Figur 3** zeigt ein weiteres Ausführungsbeispiel eines quaderförmigen Ausschnitts des Strukturbauteils 20 für eine erfindungsgemäße Windenergieanlage, wobei bei diesem Ausführungsbeispiel sämtliche der Befestigungsausnehmungen 4B jeweils ein Innengewinde aufweisen.

Wie bereits mehrfach erwähnt, können bei einer erfindungsgemäßen Windenergieanlage die im Betriebszustand vorgesehenen Schraubverbindungen 5A und 5B der Tragstruktur 10 aus Fig. 1 zu Wartungszwecken aus den ursprünglich nur für Wartungszwecke vorgesehenen Befestigungsausnehmungen 4A und 4B entfernt werden, so dass die Befestigungsausnehmungen 4A und 4B zur Befestigung eines oder mehrerer Betriebsmittel genutzt werden können, wobei bei der Durchführung eines erfindungsgemäßen Verfahrens zum Betreiben, insbesondere zum Warten, einer erfindungsgemäßen Windenergieanlage die folgenden Schritte durchgeführt werde:
a) Überführen der Windenergieanlage von einem Betriebszustand in einen Wartungszustand durch Lösen der Schraubverbindungen 5A und 5B, mittels welcher das Verstärkungselement 3 mit dem Strukturbauteil 1 verschraubt ist, und Entfernen des Verstärkungselements 3,
b) Durchführen von Wartungsarbeiten, und
c) Überführen der Windenergieanlage vom Wartungszustand in den Betriebszustand durch Bereitstellen des Verstärkungselements 3 oder eines Ersatz-Verstärkungselements und Verbinden des Verstärkungselements 3 oder des Ersatz-Verstärkungselements mit dem Befestigungsabschnitt 2 des Strukturbauteils 1 durch Einbringen von Schraub-Befestigungsmitteln 6A und 6B in zumindest einen Teil der zur Befestigung eines Betriebsmittels vorgesehenen Befestigungsausnehmungen 4A und 4B und Verschrauben des Verstärkungselements 3 oder des Ersatz-Verstärkungselements mit dem Befestigungsabschnitt des Strukturbauteils 1 mittels definiert vorgespannter Schraubverbindungen 5A und 5B.

Die Schraubverbindungen 5A und 5B werden dabei insbesondere mit einer derart definierten Vorspannung hergestellt, die derart bemessen ist, dass Druckeigenspannungen induziert werden, welche derart hoch sind, dass über einen definierten Anteil einer Auslegungs-Betriebsdauer keine Zugspannungen im Bereich um die Befestigungsausnehmungen 4A und 4B herum auftreten.

Bei diesem Ausführungsbeispiel sind die Vorspannungen dabei derart gewählt, dass über wenigstens 90 % der Auslegungs-Betriebsdauer keine Zugspannungen in dem Bereich, insbesondere in dem Befestigungsbereich bzw. dem Verstärkungsbereich des Strukturbauteils 1 während eines Soll-Betriebs auftreten.

Ist das Verstärkungselement 3 entfernt, wie bei den Figuren 2 und 3, kann über die Befestigungsausnehmungen 4A und 4B ein entsprechendes Betriebsmittel mit dem Strukturbauteil 1 verbunden, insbesondere verschraubt, werden, wobei auch die Schraubverbindungen zur Befestigung des Betriebsmittels in bevorzugter Weise, insbesondere bei einer bevorzugten Durchführung eines erfindungsgemäßen Verfahrens mit einer definierten Vorspannkraft, hergestellt werden.

Bei einer gemäß einer weiteren Erfindung ausgebildeten Windenergieanlage entfällt gegenüber der vorliegenden Erfindung das Verstärkungselement. Das heißt, dass eine Windenergieanlage gemäß einer weiteren Erfindung lediglich in die Befestigungsausnehmungen des Strukturbauteils eingebrachte Schraub-Befestigungsmittel aufweist, welche im Betriebszustand definiert vorgespannt sind und im Wartungszustand gelöst sind und die Befestigungsausnehmungen zur Befestigung eines Betriebsmittels genutzt werden können.

Entsprechend entfällt bei einem Verfahren zum Betreiben einer Windenergieanlage gemäß der weiteren Erfindung das Entfernen und Anordnen und erneute Verschrauben des Verstärkungselements. Es sind jeweils vom Überführen der Windenergieanlage vom Betriebszustand in den Wartungszustand bzw. umgekehrt jeweils nur die Schraubverbindungen zu lösen, die Schraub-Befestigungsmittel zu entfernen und die Schraubverbindungen nach dem Durchführen der Wartungsarbeiten wiederherzustellen.

Dies kann in einigen Fällen bereits Vorteile bringen, insbesondere können dadurch wenigstens die Befestigungsausnehmungen ausgefüllt werden, wodurch sich zumindest ein verbesserter Korrosionsschutz ergibt. Ferner bewirkt bereits das Einbringen der Schraubverbindungen und ein definiertes Vorspannen der Schraubverbindungen geringe Druckeigenspannungen, welche in einigen Anwendungsfällen bereits ausreichend sein können, um die Betriebsfestigkeit des Strukturbauteils um einen gewünschten Betrag zu erhöhen.

Der Vorteil der weiteren Erfindung liegt darin, dass durch den Wegfall des Verstärkungselements sowie der genannten Verfahrensschritte in vielen Fällen wirtschaftliche Einsparungen erreicht werden können und in vielen Fällen auch ein schnelleres Überführen einer Windenergieanlage vom Betriebszustand in den Wartungszustand und umgekehrt möglich ist.

Selbstverständlich ist eine Vielzahl von Abwandlungen, insbesondere konstruktiver Art, möglich, ohne den Inhalt der Patentansprüche zu verlassen.

### Bezugszeichenliste

- 1, 20: Strukturbauteil
- 2: Befestigungsabschnitt des Strukturbauteils
- 3: Verstärkungselement
- 4A: Befestigungsausnehmung ohne Gewinde
- 4B: Befestigungsausnehmung mit Gewinde
- 5A, 5B: Schraubverbindungen
- 6A, 6B: Schraub-Befestigungsmittel
- 7: Funktionsfläche
- 8: Fase
- 10: Tragstruktur

- DS: Dicke des Strukturbauteils
- DV: Dicke des Verstärkungselements

- α: Innenwinkel

## Patentansprüche

1. Windenergieanlage mit einer Tragstruktur (10), wobei die Tragstruktur (10) wenigstens ein Strukturbauteil (1, 20) mit wenigstens einem Befestigungsabschnitt (2) und wenigstens ein Verstärkungselement (3) aufweist,
- wobei das Strukturbauteil (1, 20) mehrere Befestigungsausnehmungen (4A, 4B) aufweist, welche zur Befestigung eines Betriebsmittels vorgesehen sind,
- wobei das Strukturbauteil (1, 20) während eines Betriebs der Windenergieanlage zumindest teilweise dynamisch belastet wird und wenigstens eine Befestigungsausnehmung (4A, 4B) in einem während des Betriebs der Windenergieanlage dynamisch belasteten Bereich liegt,
- wobei das Strukturbauteil (1, 20) zur Befestigung eines Betriebsmittels für und/oder während einer Durchführung von Wartungsarbeiten ausgebildet ist, wobei das Betriebsmittel eine Wartungsvorrichtung, ein Wartungshilfsmittel, ein Hebezeug oder eine Abstützvorrichtung, welche zur Abstützung eines oder mehrerer Teile der Windenergieanlage ausgebildet ist, ist, und
- wobei die Windenergieanlage in wenigstens zwei Zuständen betreibbar ist, wobei ein erster Zustand ein Betriebszustand ist und ein zweiter Zustand ein Wartungszustand,
- wobei im Betriebszustand das Verstärkungselement (3) mittels definiert vorgespannter Schraubverbindungen (5A 5B) mit in zumindest einen Teil der zur Befestigung eines Betriebsmittels vorgesehenen Befestigungsausnehmungen (4A, 4B) eingebrachten Schraub-Befestigungsmitteln (6A, 6B) mit dem Befestigungsabschnitt (2) des Strukturbauteils (1, 20) verschraubt ist, und
- wobei im Wartungszustand die Schraubverbindungen (5A, 5B) gelöst sind und das Verstärkungselement (3) von dem Strukturbauteil (1, 20) der Tragstruktur (10) entfernt ist, und über die zur Befestigung eines Betriebsmittels vorgesehenen Befestigungsausnehmungen (4A, 4B) ein Betriebsmittel mit dem Befestigungsabschnitt (2) des Strukturbauteils (1, 20) verbindbar ist.

2. Windenergieanlage nach Anspruch 1, wobei der Befestigungsabschnitt (2) wenigstens eine Funktionsoberfläche (7) aufweist und sich zumindest einige der Befestigungsausnehmungen (4A, 4B), insbesondere sämtliche Befestigungsausnehmungen (4A, 4B) des Befestigungsabschnitts (2), ausgehend von der Funktionsoberfläche (7) erstrecken, insbesondere senkrecht zur Funktionsoberfläche (7).

3. Windenergieanlage nach einem der vorhergehenden Ansprüche, wobei das Strukturbauteil (1, 20) während des Betriebs der Windenergieanlage zumindest teilweise dynamisch auf Zug belastet wird, insbesondere mit einer Belastungsrichtung quer, insbesondere senkrecht, zur Erstreckungsrichtung der Befestigungsausnehmungen (4A, 4B).

4. Windenergieanlage nach einem der vorhergehenden Ansprüche, wobei wenigstens eine Befestigungsausnehmung (4A) eine Durchgangsöffnung ist, und wobei vorzugsweise wenigstens eine Schraubverbindung (5A, 5B) eine Durchsteckschraubverbindung (5A) ist.

5. Windenergieanlage nach einem der vorhergehenden Ansprüche, wobei vorzugsweise wenigstens eine Schraubverbindung (5A, 5B) derart vorgespannt ist, dass in einem Bereich um die zugehörige Befestigungsausnehmung (4A, 4B) der Schraubverbindung (5A, 5B) herum im unbelasteten Zustand der Tragstruktur (10) ein Druckeigenspannungszustand vorliegt.

6. Windenergieanlage nach Anspruch 5, wobei wenigstens eine Schraubverbindung (5A, 5B) derart definiert vorgespannt ist, dass die infolge der Vorspannung der Schraubverbindung (5A, 5B) induzierten Druckeigenspannungen so groß sind, dass über wenigstens 50% einer definierten Auslegungs-Betriebsdauer, vorzugsweise über wenigstens 75%, insbesondere über 90%, besonders bevorzugt über 95%, insbesondere über die gesamte Auslegungs-Betriebsdauer der Windenergieanlage, in einem an die zugehörige Befestigungsausnehmung (4A, 4B) angrenzenden Bereich um die zugehörige Befestigungsausnehmung (4A, 4B) herum während eines Soll-Betriebs der Windkraftanlage quer zur Befestigungsausnehmung (4A, 4B) nur Zugspannungen mit einer gegenüber einem Zustand ohne Druckeigenspannungen reduzierten Amplitude auftreten.

7. Windenergieanlage nach einem der vorhergehenden Ansprüche, wobei im Betriebszustand der Windenergieanlage eine primäre Funktion des Verstärkungselement eine Verstärkung des Strukturbauteils ist, mit welchem das Verstärkungselement verschraubt ist.

8. Windenergieanlage nach einem der vorhergehenden Ansprüche, wobei das Verstärkungselement eine Kontaktfläche aufweist und mit dieser im Betriebszustand der Windenergieanlage flächig am Strukturbauteil anliegt, wobei das Verstärkungselement mit einer zusammenhängenden Kontaktfläche am Strukturbauteil anliegt, insbesondere mit einer einzigen, zusammenhängenden Kontaktfläche.

9. Windenergieanlage nach einem der vorhergehenden Ansprüche, wobei das Verstärkungselement (3) vorzugsweise plattenartig oder plattenförmig ausgebildet ist oder eine Platte ist, insbesondere eine Stahlplatte.

10. Windenergieanlage nach Anspruch 9, wobei das Verstärkungselement (3) eine Dicke (DV) von wenigstens 10%, insbesondere von wenigstens 15%, vorzugsweise von wenigstens 20%, insbesondere von wenigstens 30%, einer mittleren Wandstärke (DS) des Befestigungsabschnitts (2) in einem durch das Verstärkungselement (3) verstärkten Bereich aufweist, höchstens jedoch eine Dicke (DV) von 40%, 50% oder 100% der mittleren Wandstärke (DS) des Befestigungsabschnitts (2) im Verstärkungsbereich.

11. Windenergieanlage nach einem der vorhergehenden Ansprüche, wobei wenigstens eine Umfangseitenfläche oder sämtliche Umfangsseitenflächen des Verstärkungselements (3) als Fase (8) ausgebildet ist, insbesondere sämtliche Umfangsseitenflächen, insbesondere mit einem Innenwinkel (α) von höchstens 60°, 45°, 30°, 20° oder 15° und vorzugsweise wenigstens 10°, insbesondere jedoch wenigstens 15°, zu einer zwischen dem Befestigungsabschnitt (2) und dem Verstärkungselement (3) verlaufenden Trennebene.

12. Verfahren zum Betreiben, insbesondere zum Warten, einer Windenergieanlage nach einem der Ansprüche 1 bis 11, **gekennzeichnet durch** die Schritte:
a) Überführen der Windenergieanlage von einem Betriebszustand in einen Wartungszustand durch Lösen der Schraubverbindungen (5A, 5B), mittels welcher das Verstärkungselement (3) mit dem Strukturbauteil (1, 20) verschraubt ist, und Entfernen des Verstärkungselements (3),
b) Durchführen von Wartungsarbeiten, und
c) Überführen der Windenergieanlage vom Wartungszustand in den Betriebszustand durch Bereitstellen des Verstärkungselements (3) oder eines Ersatz-Verstärkungselements und Verbinden des Verstärkungselements (3) oder des Ersatz-Verstärkungselements mit dem Befestigungsabschnitt (2) des Strukturbauteils (1, 20) durch Einbringen von Schraub-Befestigungsmitteln (6A, 6B) in zumindest einen Teil der zur Befestigung eines Betriebsmittels vorgesehenen Befestigungsausnehmungen (4A, 4B) und Verschrauben des Verstärkungselements (3) oder des Ersatz-Verstärkungselements mit dem Befestigungsabschnitt des Strukturbauteils (1, 20) mittels definiert vorgespannter Schraubverbindungen (5A, 5B).

13. Verfahren nach Anspruch 12, ferner aufweisend die Schritte:
i) Bereitstellen eines Betriebsmittels,
ii) Verbinden des Betriebsmittels mit dem Befestigungsabschnitt (2) des Strukturbauteils (1, 20) über die zur Befestigung eines Betriebsmittels vorgesehenen Befestigungsausnehmungen (4A, 4B),
iii) Lösen der Verbindung des Betriebsmittels mit dem Befestigungsabschnitt (2) des Strukturbauteils (1, 20), und
iv) Entfernen des Betriebsmittels,
wobei die Schritte i) und ii) vorzugsweise vor Schritt b) durchgeführt werden, und die Schritte iii) und iv) vorzugsweise nach Schritt b).

14. Verfahren nach Anspruch 13, wobei das Verbinden des Betriebsmittels mit dem Befestigungsabschnitt (2) des Strukturbauteils (1, 20) über die zur Befestigung des Betriebsmittels vorgesehenen Befestigungsausnehmungen (4A, 4B) in Schritt ii) durch Einbringen von Schraub-Befestigungsmitteln (6A, 6B) in zumindest einen Teil der zur Befestigung des Betriebsmittels vorgesehenen Befestigungsausnehmungen (4A, 4B) und Verschrauben des Betriebsmittels mit dem Strukturbauteil (1, 20) mittels definiert vorgespannter Schraubverbindungen (5A, 5B) erfolgt.

## Claims

1. A wind energy installation comprising a support structure (10), wherein the support structure (10) comprises at least one structural component (1, 20) having at least one fastening portion (2) and at least one reinforcing element (3),
- wherein the structural component (1, 20) comprises a plurality of fastening recesses (4A, 4B), which are provided for fastening an operating means,
- wherein the structural component (1, 20) is at least partially dynamically loaded during operation of the wind energy installation and at least one fastening recess (4A, 4B) is located in an area that is dynamically loaded during operation of the wind energy installation,
- wherein the structural component (1, 20) is constructed for fastening an operating means for the performance of maintenance work and / or during the performance of maintenance work, wherein the operating means is a maintenance device, an auxiliary maintenance means, a lifting device or a support device which is constructed so as to support one or more parts of the wind energy installation, and
- wherein the wind energy installation can be operated in at least two states, wherein a first state is an operating state, and a second state is a maintenance state,
- wherein, in the operating state, the reinforcing element (3) is screwed to the fastening portion (2) of the structural component (1, 20) by means of screw connections (5A, 5B) which are pre-stressed in a defined manner and which comprise screw fastening means (6A, 6B) which are introduced into at least a portion of the fastening recesses (4A, 4B) which are provided for fastening an operating means, and
- wherein, in the maintenance state, the screw connections (5A, 5B) are loosened, and the reinforcing element (3) is removed from the structural component (1, 20) of the support structure (10), and an operating means can be connected to the fastening portion (2) of the structural component (1, 20) via the fastening recesses (4A, 4B) which are provided for fastening an operating means.

2. The wind energy installation according to claim 1, wherein the fastening portion (2) has at least one functional surface (7), and at least some of the fastening recesses (4A, 4B), in particular all of the fastening recesses (4A, 4B) of the fastening portion (2), extend from the functional surface (7), in particular perpendicular to the functional surface (7).

3. The wind energy installation according to any one of the preceding claims, wherein the structural component (1, 20) is at least partially dynamically loaded under tensile stress during operation of the wind energy installation, in particular with a load direction transverse, in particular perpendicular, to the direction in which the fastening recesses (4A, 4B) extend.

4. The wind energy installation according to any one of the preceding claims, wherein at least one fastening recess (4A) is a through-hole, and wherein preferably at least one screw connection (5A, 5B) is a through-bolt connection (5A).

5. The wind energy installation according to any one of the preceding claims, wherein preferably at least one screw connection (5A, 5B) is pre-stressed in such a way that, in a region around the respective fastening recess (4A, 4B) of the screw connection (5A, 5B), a state of residual compressive stress exists in the unloaded state of the support structure (10).

6. The wind energy installation according to claim 5, wherein at least one screw connection (5A, 5B) is pre-stressed in a defined manner in such a way that the residual compressive stresses which are induced as a result of the pre-stressing of the screw connection (5A, 5B) are great enough that over at least 50% of a defined design operating time, preferably over at least 75%, in particular over 90%, particularly preferably over 95%, in particular over the entire design operating time of the wind energy installation, in a region adjacent to the respective fastening recess (4A, 4B) around the respective fastening recess (4A, 4B), during an intended operation of the wind energy installation, tensile stresses transverse to the fastening recess (4A, 4B) occur only with an amplitude which is reduced when compared with a state without residual compressive stresses.

7. The wind energy installation according to any one of the preceding claims, wherein, in the operating state of the wind energy installation, a primary function of the reinforcing element is to reinforce the structural component to which the reinforcing element is screwed.

8. The wind energy installation according to any one of the preceding claims, wherein the reinforcing element has a contact surface, and, in the operating state of the wind energy installation, the reinforcing element forms an area contact with the structural component via the contact surface, wherein the reinforcing element rests against the structural component with a contiguous contact surface, in particular with a single, contiguous contact surface.

9. The wind energy installation according to any one of the preceding claims, wherein the reinforcing element (3) is preferably constructed in a plate-like manner or is in a plate shape or is a plate, in particular a steel plate.

10. The wind energy installation according to claim 9, wherein the reinforcing element (3) has a thickness (DV) of at least 10%, in particular of at least 15%, preferably of at least 20%, in particular of at least 30%, of an average wall thickness (DS) of the fastening portion (2) in a region which is reinforced by the reinforcing element (3), but at most a thickness (DV) of 40%, 50% or 100% of the average wall thickness (DS) of the fastening portion (2) in the reinforcement region.

11. The wind energy installation according to any one of the preceding claims, wherein at least one circumferential side surface or all circumferential side surfaces of the reinforcing element (3) is / are constructed as a chamfer (8), in particular all circumferential side surfaces, in particular with an internal angle (α) of at most 60°, 45°, 30°, 20° or 15°, and preferably at least 10°, but in particular at least 15°, to a separating plane which extends between the fastening portion (2) and the reinforcing element (3).

12. A method of operating a wind energy installation according to any one of claims 1 to 11, in particular a method of maintaining a wind energy installation according to any one of claims 1 to 11, **characterised by** the steps of:
a) transferring the wind energy installation from an operating state to a maintenance state by loosening the screw connections (5A, 5B), by means of which the reinforcing element (3) is screwed to the structural component (1, 20), and removing the reinforcing element (3),
b) carrying out maintenance work, and
c) transferring the wind energy installation from the maintenance state to the operating state by providing the reinforcing element (3) or a replacement reinforcing element and connecting the reinforcing element (3) or the replacement reinforcing element to the fastening portion (2) of the structural component (1, 20) by inserting screw fastening means (6A, 6B) into at least a portion of the fastening recesses (4A, 4B) provided for fastening an operating means and screwing the reinforcing element (3) or the replacement reinforcing element to the fastening portion of the structural component (1, 20) by means of screw connections (5A, 5B) which are pre-stressed in a defined manner.

13. The method according to claim 12, further comprising the steps of:
i) providing an operating means,
ii) connecting the operating means to the fastening portion (2) of the structural component (1, 20) via the fastening recesses (4A, 4B) which are provided for fastening an operating means,
iii) loosening the connection of the operating means to the fastening portion (2) of the structural component (1, 20), and
iv) removing the operating means,
wherein the steps i) and ii) are preferably carried out before step b), and wherein the steps iii) and iv) are preferably carried out after step b).

14. The method according to claim 13, wherein, in step ii), the connecting of the operating means to the fastening portion (2) of the structural component (1, 20) via the fastening recesses (4A, 4B) which are provided for fastening the operating means is carried out by inserting screw fastening means (6A, 6B) into at least a portion of the fastening recesses (4A, 4B) which are provided for fastening the operating means, and by screwing the operating means to the structural component (1, 20) by means of screw connections (5A, 5B) which are pre-stressed in a defined manner.

## Revendications

1. Eolienne avec une structure porteuse (10), dans laquelle la structure porteuse (10) présente au moins un composant structurel (1, 20) avec au moins une section de fixation (2) et au moins un élément de renforcement (3),
- dans laquelle le composant structurel (1, 20) présente plusieurs évidements de fixation (4A, 4B), lesquels sont prévus pour fixer un moyen d'exploitation,
- dans laquelle le composant structurel (1, 20) est contraint au moins en partie de manière dynamique pendant un fonctionnement de l'éolienne et au moins un évidement de fixation (4A, 4B) se situe dans une zone contrainte de manière dynamique pendant le fonctionnement de l'éolienne,
- dans laquelle le composant structurel (1, 20) est réalisé pour fixer un moyen d'exploitation pour et/ou pendant une mise en œuvre de travaux de maintenance, dans laquelle le moyen d'exploitation est un dispositif de maintenance, un moyen auxiliaire de maintenance, un engin de levage ou un dispositif de soutien, lequel est réalisé pour soutenir une ou plusieurs parties de l'éolienne, et
- dans laquelle l'éolienne peut fonctionner dans au moins deux états, dans laquelle un premier état est un état de fonctionnement et un deuxième état est un état de maintenance,
-- dans laquelle dans l'état de fonctionnement, l'élément de renforcement (3) est vissé à la section de fixation (2) du composant structurel (1, 20) avec des moyens de fixation par vissage (6A, 6B) introduits dans au moins une partie des évidements de fixation (4A, 4B) prévus pour la fixation d'un moyen d'exploitation au moyen de liaisons vissées (5A, 5B) précontraintes de manière définie, et
-- dans laquelle dans l'état de maintenance, les liaisons vissées (5A, 5B) sont desserrées et l'élément de renforcement (3) est retiré du composant structurel (1, 20) de la structure porteuse (10), et un moyen d'exploitation peut être relié à la section de fixation (2) du composant structurel (1, 20) par l'intermédiaire des évidements de fixation (4A, 4B) prévus pour la fixation d'un moyen d'exploitation.

2. Eolienne selon la revendication 1, dans laquelle la section de fixation (2) présente au moins une surface fonctionnelle (7) et au moins certains des évidements de fixation (4A, 4B), en particulier tous les évidements de fixation (4A, 4B), de la section de fixation (2) s'étendent en partant de la surface fonctionnelle (7), en particulier de manière perpendiculaire par rapport à la surface fonctionnelle (7).

3. Eolienne selon l'une quelconque des revendications précédentes, dans laquelle le composant structurel (1, 20) est contraint au moins en partie de manière dynamique en traction pendant le fonctionnement de l'éolienne, en particulier avec une direction de contrainte de manière transversale, en particulier de manière perpendiculaire, par rapport à la direction d'extension des évidements de fixation (4A, 4B).

4. Eolienne selon l'une quelconque des revendications précédentes, dans laquelle au moins un évidement de fixation (4A) est une ouverture de passage, et dans laquelle de préférence au moins une liaison vissée (5A, 5B) est une liaison vissée par enfichage traversant (5A).

5. Eolienne selon l'une quelconque des revendications précédentes, dans laquelle de préférence au moins une liaison vissée (5A, 5B) est précontrainte de telle manière qu'un état de contrainte interne de pression est présent dans l'état non contraint de la structure porteuse (10) dans une zone tout autour de l'évidement de fixation (4A, 4B) associé de la liaison vissée (5A, 5B).

6. Eolienne selon la revendication 5, dans laquelle au moins une liaison vissée (5A, 5B) est précontrainte de manière définie de telle manière que les contraintes internes de pression induites suite à la précontrainte de la liaison vissée (5A, 5B) sont si grandes que n'apparaissent que des tensions de traction avec une amplitude réduite par rapport à un état sans contraintes internes de pression sur au moins 50 % d'une durée de fonctionnement de conception définie, de préférence sur au moins 75 %, en particulier sur 90 %, de manière particulièrement préférée sur 95 %, en particulier sur la totalité de la durée de fonctionnement de conception de l'éolienne, dans une zone jouxtant l'évidement de fixation (4A, 4B) associé tout autour de l'évidement de fixation (4A, 4B) associé pendant un fonctionnement de consigne de l'éolienne de manière transversale par rapport à l'évidement de fixation (4A, 4B).

7. Eolienne selon l'une quelconque des revendications précédentes, dans laquelle une fonction primaire de l'élément de renforcement est, dans l'état de fonctionnement de l'éolienne, un renforcement du composant structurel, auquel l'élément de renforcement est vissé.

8. Eolienne selon l'une quelconque des revendications précédentes, dans laquelle l'élément de renforcement présente une surface de contact et repose par celle-ci, dans l'état de fonctionnement de l'éolienne, à plat sur le composant structurel, dans laquelle l'élément de renforcement repose par une surface de contact contiguë, sur le composant structurel, en particulier par une unique surface de contact contiguë.

9. Eolienne selon l'une quelconque des revendications précédentes, dans laquelle l'élément de renforcement (3) est réalisé de préférence à la manière d'une plaque ou en forme de plaque ou est une plaque, en particulier une plaque en acier.

10. Eolienne selon la revendication 9, dans laquelle l'élément de renforcement (3) présente une épaisseur (DV) d'au moins 10 %, en particulier d'au moins 15 %, de préférence d'au moins 20 %, en particulier d'au moins 30 %, d'une épaisseur de paroi moyenne (DS) de la section de fixation (2) dans une zone renforcée par l'élément de renforcement (3), au maximum toutefois une épaisseur (DV) de 40 %, 50 % ou 100 % de l'épaisseur de paroi moyenne (DS) de la section de fixation (2) dans la zone de renforcement.

11. Eolienne selon l'une quelconque des revendications précédentes, dans laquelle au moins une surface latérale périphérique ou toutes les surfaces latérales périphériques de l'élément de renforcement (3) est ou sont réalisées en tant qu'un biseau (8), en particulier toutes les surfaces latérales périphériques, en particulier avec un angle intérieur (α) de 60°, 45°, 30°, 20° ou 15° au maximum et de préférence d'au moins 10°, en particulier toutefois de 15°, par rapport à un plan de séparation s'étendant entre la section de fixation (2) et l'élément de renforcement (3).

12. Procédé pour faire fonctionner, en particulier pour entretenir, une éolienne selon l'une quelconque des revendications 1 à 11, **caractérisé par** les étapes :
a) de transfert de l'éolienne depuis un état de fonctionnement dans un état de maintenance en desserrant les liaisons vissées (5A, 5B), au moyen desquelles l'élément de renforcement (3) est vissé au composant structurel (1, 20), et de retrait de l'élément de renforcement (3),
b) de mise en œuvre de travaux de maintenance, et
c) de transfert de l'éolienne depuis l'état de maintenance dans l'état de fonctionnement en fournissant l'élément de renforcement (3) ou un élément de renforcement de remplacement et de liaison de l'élément de renforcement (3) ou de l'élément de renforcement de remplacement à la section de fixation (2) du composant structurel (1, 20) en introduisant des moyens de fixation par vissage (6A, 6B) dans au moins une partie des évidements de fixation (4A, 4B) prévus pour la fixation d'un moyen d'exploitation et de vissage de l'élément de renforcement (3) ou de l'élément de renforcement de remplacement à la section de fixation du composant structurel (1, 20) au moyen de liaisons vissées (5A, 5B) précontraintes de manière définie.

13. Procédé selon la revendication 12, présentant en outre les étapes :
i) de fourniture d'un moyen d'exploitation,
ii) de liaison du moyen d'exploitation à la section de fixation (2) du composant structurel (1, 20) par l'intermédiaire des évidements de fixation (4A, 4B) prévus pour la fixation d'un moyen d'exploitation,
iii) de desserrage de la liaison du moyen d'exploitation à la section de fixation (2) du composant structurel (1, 20), et
iv) de retrait du moyen d'exploitation,
dans lequel les étapes i) et ii) sont mises en œuvre de préférence avant l'étape b), et les étapes iii) et iv) de préférence après l'étape b).

14. Procédé selon la revendication 13, dans lequel la liaison du moyen d'exploitation à la section de fixation (2) du composant structurel (1, 20) a lieu par l'intermédiaire des évidements de fixation (4A, 4B) prévus pour la fixation du moyen d'exploitation lors de l'étape ii) par l'introduction de moyens de fixation par vissage (6A, 6B) dans au moins une partie des évidements de fixation (4A, 4B) prévus pour la fixation du moyen d'exploitation et par vissage du moyen d'exploitation au composant structurel (1, 20) au moyen de liaisons vissées (5A, 5B) précontraintes de manière définie.
